(19) Europäisches Patentamt
European Patent Office
Office européen des brevets

(11) EP 1 767 376 B1

(12) **EUROPEAN PATENT SPECIFICATION**

(45) Date of publication and mention of the grant of the patent:
**27.07.2011 Bulletin 2011/30**

(21) Application number: **05741459.1**

(22) Date of filing: **17.05.2005**

(51) Int Cl.:
***B41M 5/52*** *(2006.01)* ***C08F 220/18*** *(2006.01)*
***C08F 220/56*** *(2006.01)*

(86) International application number:
**PCT/JP2005/008924**

(87) International publication number:
**WO 2005/110767 (24.11.2005 Gazette 2005/47)**

(54) **ORGANIC PARTICLE FOR INKJET RECORDING SHEET AND RECORDING SHEET**

ORGANISCHES TEILCHEN FÜR TINTENSTRAHLAUFZEICHNUNGSMATERIAL UND AUFZEICHNUNGSMATERIAL

PARTICULE ORGANIQUE POUR FEUILLE D'ENREGISTREMENT À JET D'ENCRE ET FEUILLE D'ENREGISTREMENT

(84) Designated Contracting States:
**AT BE BG CH CY CZ DE DK EE ES FI FR GB GR HU IE IS IT LI LT LU MC NL PL PT RO SE SI SK TR**

(30) Priority: **18.05.2004 JP 2004148076**
**17.09.2004 JP 2004270985**

(43) Date of publication of application:
**28.03.2007 Bulletin 2007/13**

(73) Proprietor: **Mitsui Chemicals, Inc.**
**Tokyo 105-7117 (JP)**

(72) Inventors:
- **TOMITA, Yoshihiko, c/o Mitsui Chemicals, Inc.**
**Sodegaura-shi, Chiba 299-0265 (JP)**
- **KUSUMOTO, Masaya, c/o Mitsui Chemicals, Inc.**
**Sodegaura-shi, Chiba 299-0265 (JP)**
- **OKADA, Yasuo, c/o Mitsui Chemicals, Inc.**
**Sodegaura-shi, Chiba 299-0265 (JP)**

(74) Representative: **HOFFMANN EITLE**
**Patent- und Rechtsanwälte**
**Arabellastraße 4**
**81925 München (DE)**

(56) References cited:
**EP-A1- 1 051 963**
**WO-A-03/057495**
**WO-A1-03/008198**
**JP-A- 7 117 335**
**JP-A- 10 509 253**
**JP-A- 10 510 062**
**JP-A- 2002 046 345**
**JP-A- 2004 042 626**
**US-A- 5 310 595**
**US-B1- 6 338 838**
**US-B1- 6 586 097**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 767 376 B1

## Description

### TECHNICAL FIELD

The present invention relates to organic particles for an inkjet recording sheet applied to printers or plotters utilizing an inkjet recording system and an inkjet recording sheet comprising the same.

### BACKGROUND ART

The inkjet recording system comprises effecting flight of minuscule ink liquid droplets according to various operating principles and sticking them to paper or other recording sheets to thereby attain recording of images, characters, etc. With respect to printers or plotters utilizing the inkjet recording system, efforts are being made to attain an enhancement of resolution and an expansion of color reproduction range in accordance with the market demand for further image quality improvement. These are being coped with by increasing the amount of ink discharged. Accordingly, an increase of ink reception capacity in conformity with the amount of ink discharged is now an important technical task for recording sheets, and thus it is now indispensable to ensure high ink reception capacity and attain application of a coating layer capable of desirable color formation. In addition, it is now demanded for appearances such as gloss, stiffness and hue, and durability such as light resistance, yellowing resistance and gas resistance to resemble those of sheets for silver salt photography. Meeting these demands with conventional inkjet recording sheets of wood free paper and coated paper is becoming difficult.

Inkjet recording sheets has been calendered at high linear pressure in order to impart gloss thereto. In this method, however, there has occurred such a problem that voids of a coating layer are reduced so as to obtain sufficient gloss to thus result in delay in ink absorption and insufficient ink absorption capacity, thereby resulting in bleeding of ink. Consequently, calendering must be performed under conditions selected within the permissible range of ink absorption capacity. Thus, it is difficult to simultaneously attain ink absorptivity and high gloss in current techniques.

As a method for obtaining higher gloss, it has proposed that an inkjet recording sheet is produced by a method referred to as a cast coating method in which a large amount of microsized inorganic particles are contained in a coating layer. However, in the cast coating method, a coating surface and a cast drum have to contact with each other until the coating layer is completely dried, and hence productivity is remarkably lowered.as compared to smoothness by calendaring. Further, it has been investigated that a pigment ink having excellent light resistance and gas resistance is used as an ink itself for the purpose of enhancing durability such as light resistance and gas resistance. In an ink using a pigment, there has been a problem that a nozzle serving as an ink discharging port is easily blocked. Further, when the pigment ink is used, the pigment ink remained around the surface layer of printed matters is scraped off due to friction and rubbing, the so-called scratch resistance is deteriorated.

Patent Document 1 discloses a cationic additive for inkjet recording, in which a copolymerizable monomer containing 50 to 100 mol% of an alicyclic (meth)acrylic ester is copolymerized in the presence of a polymer containing 50 to 100 mol% of a cationic monomer. Patent Document 2 discloses a recording sheet in which a cationic emulsion composition is contained in a gloss layer. These have been improved in water resistance and printing concentration by using together a component in which a cationic monomer is copolymerized. However, when the amount of the cationic polymer is increased, there has been a problem that it is difficult to ensure ink absorptivity since the content of inorganic particles is decreased.

Further, the present inventors have proposed that cationic organic particles with a degree of cationization of 20 to 300 μeq/g are useful, but it could be said that productivity of an inkjet recording sheet is not necessarily sufficient (Patent Document 3). As a technique intended for imparting a gloss, for example, an inkjet recording sheet in which a coating composition comprising cationic colloidal particles consisting primarily of alumina and cationic latex is subjected to cast coating at a temperature higher than a glass transition temperature of the latex, is disclosed (Patent Document 4). However, there has been a problem that sufficient ink absorptivity cannot be yet obtained since the cationic latex acts as a binder of alumina as the inorganic particles and the latex particles are thermal-deformed to block voids.

Furthermore, there is disclosed an inkjet sheet in which a dispersion of an acrylic/styrene polymer comprising a cationic monomer and (meth)acrylamide is coated on an ink receptive layer so that ink permeability is expressed (Patent Document 5). However, acrylic/styrene organic particles in which a hydrophilic monomer such as (meth)acrylamide is copolymerized are plasticized without depending on a glass transition temperature (Tg) of the organic particles. Therefore, there has been a problem that particles are thermal-deformed to block voids and thereby sufficient ink absorptivity cannot be obtained, particularly when a smoothing treatment such as a cast coating method is carried out at high temperature.

As described above, in the conventional techniques, it has been difficult to obtain an inkjet recording sheet in which high gloss, ink absorptivity, color density, water resistance, light resistance and yellowing resistance are all satisfied and are adapted for both dye and pigment inks.

[Patent Document 1] Japanese Patent No. 3436351
[Patent Document 2] JP-A No. 11-302337
[Patent Document 3] JP-A No. 2003-211821
[Patent Document 4] JP-A No. 11-11011
[Patent Document 5] JP-A No. 2004-175113

EP 1 418 055 A1 describes a sheet for ink jet recording, comprising a sheet support and at least one ink receptive layer superimposed on a recording surface side of the sheet support. The organic particles may be emulsion particles obtained by copolymerizing at least one monomer selected from among styrene, t-butyl methacrylate, isobornyl acrylate, isobornyl methacrylate and isopropyl methacrylate with another monomer copolymerizable therewith.

WO 03/057495 A describes a composition for the gloss layer coating of ink-jet recording media, said composition comprising a synthetic resin emulsion having a particle diameter of 100 nm or less and colloidal silica, and being obtainable by emulsion-polymerizing in the presence of an emulsifier which contains a radical-polymerizable emulsifier having a sulfonic acid group, an unsaturated monomer having a silyl group and an unsaturated monomer having a six-membered ring as a side chain and, optionally, another radically polymerizable monomer which is copolymerizable therewith.

WO 96/16120 describes a water-based toner-receptive composition comprising a transparent film forming imageable polymer formed from at least one monomer selected from the group consisting of bicyclic alkyl (meth) acrylates, aliphatic alkyl (meth)acrylate having from one to 12 carbon atoms, aromatic (meth)acrylates, and amino substituted (meth)acrylates; at least one lubricating agent selected from the group consisting of monosubstituted poly(oxyethylenes) and poly-substituted poly(oxyethylenes; polymeric particles; and an antistatic agent selected from the group consisting of cationic agents, anionic agents and mixtures thereof.

WO 96/16357 describes a water-based toner-receptive composition suitable for electrophotographic or xerographic imaging, comprising from 65 to 99 parts of a transparent film-forming core/shell latex polymer, wherein the ratio of core to shell of said core/shell latex polymer ranges from 10/90 to 90/10, with the core having a lower Tg than the shell; from 1 to 15 parts polymeric particles; and from 0 to 20 parts of an antistatic agent selected from the group consisting of cationic agents, anionic agents, fluorinated agents, and nonionic agents.

US 5 310 595 A describes an image recording sheet and a transparent water-based toner receptive coating comprising an imaging copolymer formed from at least one monomer selected from the group consisting of bicyclic alkyl (meth) acrylates, aliphatic alkyl (meth)acrylates having from about one to about 12 carbon atoms, aromatic (meth) acrylates, and amino substituted (meth)acrylates or the quaternary cationic salts thereof, at least one long chain polymeric particle having good antifriction characteristics and optionally an antistatic agent selected from the group consisting of cationic agents, anionic agents, fluorinated agents, and nonionic agents.

US 6 586 097 B1 describes crosslinked microparticles between 10-300 nm in size, obtained by dispersion polymerization, in non-aqueous medium of a composition of ethylenically unsaturated polymerizable compounds, comprising at least one monomer A, comprising only one ethylenic unsaturation, giving the microparticles formed in the said non-aqueous medium self-stabilization during and after polymerization, at least one compound B comprising at least two ethylenic unsaturation and optionally at least one compound C comprising only one ethylenic unsaturation and/or at least one compound D which is different from A, B and C and comprises at least one ethylenic unsaturation which can undergo radical-mediated polymerization and at least one second reactive function other than an ethylenic unsaturation.

US 6 338 838 B1 and EP 1 051 963 A1 describe a photostable cosmetic or pharmaceutical light screening composition containing a dibenzoylmethane UV-A screening agent and a p-methoxycinnamate UV-B screening agent, one of said agents being incorporated into a polymer latex which is a colloidal dispersion of polymer particles in an aqueous or an aqueous based phase including polymers and/or copolymers of unfunctional and/or multifunctional monomers. The unfunctional monomers are selected from $C_1$-$C_8$-alkyl(meth)acrylate, $C_1$-$C_8$-alkyl(meth) acrylic acid, acrylic acid, styrene, ethylene, propylene, butylene, butadiene, isoprene, isobornylmethacrylate, trifluoroethylmethacrylate or perfluoralkyl-2-ethylacrylate; while the multifunctional monomers are selected from allylmethacrylate or ethyleneglycol dimethacrylate (EGDMA).

DISCLOSURE OF THE INVENTION

PROBLEMS TO BE SOLVED BY THIS INVENTION

It is an object of the present invention to provide organic particles for an inkjet recording sheet, which have high gloss, excellent ink absorptivity, water resistance, coating film strength, releasability from a drum during cast coating, light resistance, yellowing resistance and color density and can be adapted for both dye and pigment inks. It is another object of the present invention to provide an inkjet recording sheet comprising the organic particles.

MEANS FOR SOLVING THE PROBLEMS

The present inventors have studied extensively and intensively to solve the above problems and have found specific organic particles, and thus have completed the present invention.

Specifically, the organic particles for an inkjet recording sheet comprise a copolymer (a) which is obtained by copolymerizing alicyclic (meth)acrylate (A) represented by the formula (1) and other monomer (B) copolymerizable with, (A):

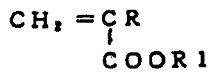
...... (1)

wherein R represents a hydrogen atom or a methyl group; and R1 represents an alicyclic hydrocarbon group having 8 to 20 carbon atoms, and a copolymer (b) which is obtained by copolymerizing (meth)acrylamide (C) and another monomer (D) copolymerizable with (C) (a)/(b) is 100/0 to 70/30 % by weight, when the total weight of (a) and (b) is taken as 100 % by weight.

Further, the alicyclic (meth)acrylate (A) represented by the formula (1) is preferably isobornyl methacrylate.

The copolymer (a) preferably comprises 20 to 100% by weight of (A) and 0 to 80% by weight of (B), when the total weight of alicyclic (meth)acrylate (A) represented by the formula (1) and the other monomer (B) copolymerizable with (A) is taken as 100% by weight.

The copolymer (b) preferably comprises 50 to 100% by weight of (C) and 0 to 50% by weight of (D), when the total weight of (meth)acrylamide (C) and the other monomer (D) copolymerizable with (C) is taken as 100% by weight.

Further, the invention provides a process for producing organic particles for an inkjet recording sheet, wherein the organic particles comprise (a) and (b) are obtained by copolymerizing (meth)acrylamide (C) and other monomer (D) copolymerizable with (C) in the presence of the copolymer (a).

The glass transition temperature of the organic particles as measured in accordance with JIS K 7121 is preferably 90 to 160°C.

The organic particles are preferably cationic organic particles. Further, the inkjet recording sheet according to the present invention comprises a sheet-shaped support and, superimposed thereon, at least one ink receptive layer superimposed thereon which contains the above-mentioned organic particles. In the ink jet recording sheet, the ink receptive layer containing the organic particles is an outermost layer, and the outermost layer is subjected to a smoothing treatment by means of a cast coating method.

Furthermore, methyl (meth)acrylate represents methyl acylate and/or methyl methacrylate and (meth)acrylamide represents methacrylamide and/or acrylamide.

BEST MODE FOR CARRYING OUT THE INVENTION

Hereinafter, the present invention will be explained in detail.

[Composition of Organic Particles]

The embodiment of the organic particles according to the invention is organic particles comprising a copolymer (a) which is obtained by copolymerizing alicyclic (meth)acrylate (A) represented by the formula (1) and other monomer (B) copolymerizable with (A). Further, the embodiment thereof is organic particles comprising the copolymer (a), and a copolymer (b) which is obtained by copolymerizing (meth)acrylamide (C) and other monomer (D) copolymerizable with (C).

<Copolymer (a) >

The copolymer (a) in the invention is a copolymer which is obtained by copolymerizing alicyclic (meth)acrylate (A) represented by the formula (1) and other copolymerizable monomer (B).

<u>Alicyclic (meth)acrylate (A)</u>

The alicyclic (meth)acrylate (A) in the invention is alicyclic (meth)acrylate represented by the formula (1):

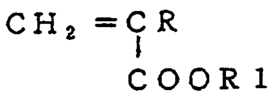

...... (1)

wherein R represents a hydrogen atom or a methyl group; and R1 represents an alicyclic hydrocarbon group having 8 to 20 carbon atoms,
and examples thereof include isobornyl acrylate and isobornyl methacrylate.

Since shape variation in organic particles is reduced by containing alicyclic (meth)acrylate (A) represented by the formula (1) therein, it is possible to enhance ink absorptivity and productivity of the inkjet recording sheet. Among these, isobornyl methacrylate is preferred.

Other Monomer (B) Copolymerizable with (A)

The other monomer (B) copolymerizable with (A) in the invention is not particularly limited and examples thereof include acrylic acid esters such as methyl acrylate, ethyl acrylate, isopropyl acrylate, n-butyl acrylate, isobutyl acrylate, 2-ethylhexyl acrylate and other C1-C20 alkyl acrylates; methacrylic acid esters such as methyl methacrylate, ethyl methacrylate, isopropyl methacrylate, n-butyl methacrylate, t-butyl methacrylate, isobutyl methacrylate, 2-ethylhexyl methacrylate and other C1-C20 methacrylates; aromatic vinyls such as styrene, 2-methylstyrene and divinylbenzene; unsaturated carboxylic acids such as acrylic acid, methacrylic acid, itaconic acid, maleic acid and acid anhydrides thereof; hydroxyl group-containing vinyls such as 2-hydroxyethyl acrylate, hydroxypropyl acrylate, 2-hydroxyethyl methacrylate and hydroxypropyl methacrylate; amides such as acrylamide, methacrylamide, N-methylolmethacrylamide and diacetone acrylamide; vinyl esters such as vinyl acetate and vinyl propionate; vinylidene halides such as vinylidene chloride and vinylidene fluoride; aminoalkyl acrylates or aminoalkyl methacrylates such as N,N-dimethylaminoethyl acrylate and N, N-dimethylaminoethyl methacrylate, and aminoalkyl acrylates or aminoalkyl methacrylates converted to quaternary salts by a halogenated methyl group, a halogenated ethyl group, etc.; N-aminoalkylacrylamides or N-aminoalkylmethacrylamides such as N,N-dimethylacrylamide, N,N-dimethylmethacrylamide, N,N-diethylacrylamide, N,N-diethylmethacrylamide, N,N-dimethylaminopropylacrylamide, N,N-dimethylaminopropylmethacrylamide, N,N-dimethylaminoethylacrylamide, N,N-dimethylaminoethylmethacrylamide and N-isopropylacrylamide, and aminoalkyl acrylates or aminoalkyl methacrylates converted to quaternary salts by a halogenated methyl group, a halogenated ethyl group, etc.; and other monomers such as acryloylmorpholine, 2-(2'-hydroxy-5'-methacryloyloxyethylphenyl)-2H-benzotriazole, 1,2,2,6,6-pentamethyl-4-piperidylmethacrylate, vinyl chloride, vinyl ether, vinyl ketone, vinylamide, ethylene, propylene, butadiene, vinylpyrrolidone, 2-methoxyethyl acrylate, glycidyl methacrylate, acrylonitrile, methacrylonitrile, ethylene glycol dimethacrylate, polyethylene glycol dimethacrylate, 1,6-hexanediol dimethacrylate, polypropylene glycol diacrylate, trimethylolpropane trimethacrylate, tetramethylolmethane triacrylate, allyl methacrylate and allyl mercaptan.

These may be selected alone or in combination of two or more kinds. In particular, when at least one selected from hydroxyl group-containing monomers such as 2-hydroxyethyl acrylate, hydroxypropyl acrylate, 2-hydroxyethyl methacrylate and hydroxypropyl methacrylate is contained, it is preferred in that stability of emulsion particles as shapes of organic particles to be obtained, is improved.

Further, when at least one selected from methyl methacrylate, t-butyl methacrylate and isobornyl methacrylate is contained, it is preferred in that shape variation in the smoothing-treated organic particles is particularly reduced.

In the content ratio of (A) and (B), the content ratio of (A) is usually 20 to 100% by weight, preferably 20 to 70% by weight and the content ratio of (B) is usually 0 to 80% by weight, preferably 30 to 80% by weight, when the total weight of (A) and (B) is taken as 100% by weight. When the content ratio of (A) and (B) is in the range described above, respectively, it is preferred in that (A) and (B) have excellent copolymerizability and unreacted monomers can be reduced. Further, since the degree of shape variation in the organic particles occurred during a smoothing treatment is low, the ink absorptivity of the inkjet recording sheet according to the invention is enhanced and glossiness thereof is not impaired.

<Copolymer (b)>

The copolymer (b) in the invention is a copolymer which is obtained by copolymerizing (meth)acrylamide (C) and other monomer (D) copolymerizable with (C).

(Meth)acrylamide (C)

The methacrylamide (C) in the invention includes acrylamide and/or methacrylamide. When methacrylamide is selected, it is preferred in that it is excellent in ink absorptivity.

Other Monomer (D) Copolymerizable with (C)

The other monomer (D) copolymerizable with (C) in the invention is not particularly limited, and examples of the other monomer (D) copolymerizable with (C) usable include the same monomers as those illustrated for the other monomer (B) copolymerizable with (A) and these may be used alone or in combination of two or more kinds. Further, in the invention, the copolymerizable monomers used for (B) may be (D).
In the content ratio of (C) and (D), the content ratio of (C) is usually 50 to 100% by weight and the content ratio of (D) is usually 0 to 50% by weight, when the total weight of (C) and (D) is taken as 100% by weight.

[Composition of Organic Particles]

The embodiment of the organic particles according to the invention is organic particles comprising the copolymer (a) as described above. Further, the embodiment thereof is organic particles comprising the copolymer (a) and a copolymer (b). (a)/(b) is 100/0 to 70/30% by weight, when the total weight of (a) and (b) is taken as 100% by weight, from the viewpoint of ink absorptivity and coating film strength of the inkjet recording sheet comprising the organic particles.

[Ionicity of Organic Particles]

Cationic organic particles having cationic properties imparted thereto as properties of the organic particles according to the invention are preferred in order to obtain high color density. The term "cationic organic particles" as used herein means organic particles having a degree of cationization of 1 μeq/g or more in the case that a 1% sample aqueous solution of organic particles having pH adjusted to 2 is titrated using a particle charge detector (PCD-03, manufactured by Mutek). As a method for imparting cationic properties to organic particles, there may be exemplified a method of using a cationic initiator, a method of using a cationic surfactant, a method of copolymerizing a cationic monomer and a method of using together with a cationic polymer. Among them, the method of using a cationic initiator and the method of using a cationic surfactant are preferred. The method of copolymerizing a cationic monomer and the method of using together with a cationic polymer may deteriorate ink absorptivity.
Examples of an initiator having a cationic group include 2,2'-azobis(2-amidinopropane) dihydrochloride, 2,2'-azobis[2-(N-phenylamidino)propane] dihydrochloride, 2,2'-azobis{2-[N-(4-chlorophenyl)amidino]propane} dihydrochloride and 2,2'-azobis(1-imino-1-pyrrolidino-2-methylpropane) dihydrochloride. Further, examples of the cationic surfactant include lauryltrimethylammonium chloride, stearyltrimethylammonium chloride, cetyltrimethylammonium chloride, distearyldimethylammonium chloride and alkylbenzyldimethylammonium chloride.

[Particle Diameter of Organic Particles]

An average particle diameter of the organic particles according to the invention is preferably 10 to 300 nm, more preferably 30 to 200 nm. The average particle diameter of the above range is preferred from the viewpoint of ink absorptivity and printing density characteristics.
Further, the average particle diameter in the invention is measured using specifically a laser particle diameter analyzing system LPA-3100 (manufactured by Otsuka Electronics Co., Ltd.).

[Glass Transition Temperature (Tg) of Organic Particles]

The glass transition temperature of the organic particles according to the invention is usually 90 to 160°C, preferably 100 to 140°C. When the glass transition temperature is in the above range, the drying temperature of a coating layer is suitable, and as a result, the production efficiency is good and the glossiness is not impaired. The glass transition temperature in the invention is determined from DSC curves in accordance with JIS K 7121.

[Construction of Recording Sheet Layer Containing Organic Particles]

The recording sheet layer containing organic particles according to the invention is excellent in gloss after smoothing treatment as long as the organic particles are present in an outermost layer of a recording surface of a recording sheet. Further, when a printer using a pigment ink is used, it is preferred in that the pigment ink has excellent fixability and improved scratch resistance. The recording sheet layer containing organic particles may comprise various additives usually used in the inkjet recording sheet. A polymer having a binder function, for example, include water soluble polymers or water dispersions of water insoluble polymer.
The amount of the polymer having a binder function to be used is usually 0 to 30% by weight based on 100% by weight of the total solid content of an ink receptive layer containing organic particles. When the amount of the binder

is large, the binder tends to fill up interparticle voids to thereby deteriorate the ink absorptivity. Further, the content of the organic particles is preferably 5 to 100% by weight in 100% by weight of the total solid content of an ink receptive layer containing organic particles.

The organic particles of the invention, even if without substantially inorganic particles, can realize high ink absorptivity. Consequently, it is not always indispensable to use organic particles together with inorganic particles. However, if desired, the organic particles can be used in combination with inorganic particles. Specific examples of the inorganic particles include light precipitated calcium carbonate, heavy calcium carbonate, magnesium carbonate, kaolin, clay, talc, calcium sulfate, barium sulfate, titanium dioxide, zinc oxide, zinc hydroxide, zinc sulfide, zinc carbonate, hydrotalcite, aluminum silicate, diatom earth, calcium silicate, magnesium silicate, synthetic amorphous silica, colloidal silica, alumina, colloidal alumina, pseudo-boehmite, aluminum hydroxide, lithopone, zeolite and magnesium hydroxide. Among these, silica and alumina are preferred from the viewpoint of attaining a high void ratio to thereby enhance the ink absorptivity of the ink receptive layer. It is more preferred to use fine particles having a primary particle diameter of 100 nm or less.

In addition, a layer containing the organic particles according to the invention may comprise an antistatic agent, an antioxidant, a dry paper strength additive, a wet paper strength additive, a waterproofing agent, an antiseptic agent, an ultraviolet absorber, a photostabilizer, a fluorescent brightener, a coloring pigment, a coloring dye, a penetrant, a blowing agent, a mold release agent, a foam inhibitor, a defoaming agent, a fluidity improver, a thickening agent, a pigment dispersant, a cationic fixer, or the like.

[Method of Measuring Gloss]

The gloss in the invention is the level of gloss at 75° of the recording surface of each recording sheet, measured in accordance with JIS Z8741. For example, the level of gloss can be measured by means of a deformation glossmeter (Model GM-3D, manufactured by Murakami Color Research Laboratory Co., Ltd.).

The recording sheet according to the invention preferably has the level of gloss at 75° of 50% or more.

[Process for Producing Organic Particles]

As the process for producing the organic particles comprising the copolymer (a) and the copolymer (b), there may be exemplified a process which comprises copolymerizing (meth)acrylamide (C) and other monomer (D) copolymerizable with (C) in the presence of the copolymer (a) which is obtained by copolymerizing alicyclic (meth)acrylate (A) represented by the formula (1) and other monomer (B) copolymerizable with (A), and a process which comprises copolymerizing alicyclic (meth)acrylate (A) represented by the formula (1) and other monomer (B) copolymerizable with

(A) in the presence of the copolymer (b) which is obtained by copolymerizing (meth)acrylamide (C) and other monomer (D) copolymerizable with (C). In particular, copolymerization of (meth)acrylamide (C) and other monomer (D) copolymerizable with (C) in the presence of the copolymer (a) is preferable because the particle diameter is easily controlled.

The organic particles according to the invention can be produced according to a conventionally well-known emulsion polymerization process or a mechanical emulsification process. For example, in the emulsion polymerization process, there can be employed a method wherein various monomers are simultaneously charged and polymerized in the presence of a dispersant and an initiator and a method wherein monomers are continuously fed and polymerized. In the emulsion polymerization process, the polymerization temperature is usually 30 to 90°C, and thus substantially a water dispersion of the organic particles, generally referred to as "emulsion", can be obtained. The water dispersion of the organic particles obtained by the emulsion polymerization process is highly stable in the presence of a small amount of a dispersant and is excellent in that the organic particles of extremely small particle diameter can be easily obtained.

Further, when the organic particles according to the invention have a multilayer structure with core/shell layers, there can be employed a method wherein a core layer is polymerized in the presence of a composition of polymer components of a shell layer and a method wherein a composition of polymer components of a shell layer is polymerized in the presence of a core layer. In the invention, for example, the copolymer (a) forms the core layer and the copolymer (b) forms the shell layer.

Examples of the dispersant preferably used in the production of the organic particles according to the invention include a cationic surfactant, an amphoteric surfactant, a nonionic surfactant, an anionic surfactant, a cationic water-soluble polymer, a nonionic water-soluble polymer and an anionic water-soluble polymer. One, or two or more kinds can be selected from these. The initiator for use in the polymerization can be any of common radical initiators.

Generally the amount of the initiator used is in the range of 0.01 to 20% by weight based on the total weight of monomers copolymerized.

[Construction of Recording Sheet]

As preferable example of the construction of the inkjet recording sheet according to the present invention, the surface layer involved for the reception of ink consists of a layer comprising the organic particles. For example, the inkjet recording sheet may have a monolayer structure in which only a layer comprising the organic particles according to the invention is superimposed on the support. Alternatively, the inkjet recording sheet may have a multilayer structure that the support is overlaid in sequence with an ink receptive layer and the layer comprising the organic particles according to the invention, or overlaid in sequence with the layer comprising the organic particles according to the invention and another layer. The amount of the layer containing the organic particles according to the invention, which is superimposed on a sheet support, is usually 1 to 300 $g/m^2$ in terms of a basis weight, this is not particularly limited.

[Type of Sheet Support]

In the present invention, as the support, use can be made of supports conventionally employed in inkjet recording sheets, for example, a paper support such as plain paper, art paper, coated paper, cast coated paper, resin coated paper, resin impregnated paper, noncoated paper or coated paper; a paper support having its both sides or one side coated with polyolefin such as polyethylene and/or polyethylene having titanium or other white pigment milled therein; a plastic support; a support of nonwoven fabric, cloth, woven fabric, metal film or metal plate; and a composite support consisting of a laminate of these.

As the plastic support, there can preferably be used, for example, a sheet or film of plastic such as polyethylene, polypropylene, polystyrene, polyethylene terephthalate, polyethylene naphthalate, triacetylcellulose, polyvinyl chloride, polyvinylidene chloride, polyimide, polycarbonate, cellophane and polynylon. Among these plastic supports, transparent, translucent, or opaque ones can appropriately be selected according to intended use.

It is also preferred to use a white plastic film as the support. As the white plastic support, use can be made of a support constituted of a plastic compounded with a small amount of white pigment such as barium sulfate, titanium oxide and zinc oxide, a foamed plastic support provided with opacity by forming a multiplicity of minute voids, and a support furnished with a layer containing a white pigment (e.g., titanium oxide or barium sulfate). In the present invention, although the configuration of the support is not limited, not only customarily employed films, sheets and plates but also cylindrical form such as that of a drink can, disc form as that of CD or CD-R and other complex forms can be used as the support.

[Process for Producing Recording Sheet]

The recording sheet of the present invention is produced by coating one side or both sides of a sheet support with a coating composition containing the organic particles and drying the coating composition so as to form a layer. The method of application of the coating liquid is not particularly limited, and use can be made of, for example, conventional application techniques by means of an air knife coater, a roll coater, a bar coater, a blade coater, a slide hopper coater, a gravure coater, a flexogravure coater, a curtain coater, an extrusion coater, a floating knife coater, a comma coater, a die coater or the like.

The treatment method for imparting gloss is not particularly limited and there can be employed the common calendering method wherein with the use of a calendar apparatus such as a supercalender or a gloss calender, the recording sheet is passed between rolls having pressure and heat applied thereto so as to smooth the surface of a coating layer. Alternatively, there can preferably be employed the cast coating method such as a direct method, a solidification method, a rewetting method and a precasting method. In particular, when the cast coating method is used, it is preferred in that high gloss and high ink absorptivity can be obtained without deterioration of ink absorptivity. In the cast coating method, the pressure at compression, the temperature of the specular drum, the coating speed, etc. can be appropriately selected. In particular, the temperature of the specular drum has an influence on the drying speed, and hence on productivity. Further, the temperature of the specular drum has an influence on the ink absorptivity of the finished recording sheet. When the organic particles of the invention are used, the temperature of the casting drum is usually 100 to 140°C. When the temperature of the casting drum is in the above range, it is preferred in that productivity is improved and high gloss is easily obtained without deterioration of ink absorptivity.

EXAMPLES

The present invention will be described by way of Examples, but it is not intended to limit the present invention thereto. Further, in the following Examples, parts and % refer to parts by weight and % by weight, respectively, unless otherwise specified.

<Preparation of Organic Particles>

The composition and the obtained glass transition temperature (Tg), the particle diameter and the ionicity of the organic particles were shown in Table 1.

[Preparative Example 1]

195 parts of deionized water and 2.0 parts of stearyltrimethylammonium chloride were charged into a reaction vessel, and heated to 70°C in a nitrogen stream. 0.5 part of 2,2'-azobis(2-amidinopropane) dihydrochloride was added to the mixture. Separately, 5 parts of 2-hydroxyethyl methacrylate, 60 parts of isobornyl methacrylate and 35 parts of methyl methacrylate were emulsified into 40 parts of deionized water in the presence of 0.5 part of stearyltrimethylammonium chloride to thereby obtain an emulsified mixture. This emulsified mixture was dropped into the above reaction vessel over a period of 4 hours and maintained at the same temperature for 4 hours. As a result, an emulsion composition wherein organic particles were dispersed in water was obtained. The nonvolatile content thereof was 30%, and the pH value of the emulsion composition was 5. The average particle diameter determined by light scattering measurement was 60 nm. The glass transition temperature of a polymer of organic particles determined from DSC curves in accordance with JIS K 7121 was 111°C.

[Preparative Example 2]

An emulsion composition was prepared using proportions shown in Table 1, in the same manner as in Preparative Example 1 except that 195 parts of deionized water and 1.8 parts of stearyltrimethylammonium chloride were charged into the reaction vessel. As a result, an emulsion composition wherein organic particles were dispersed in water was obtained. The nonvolatile content thereof was 30%, and the pH value of the emulsion composition was 5. The average particle diameter determined by light scattering measurement was 91 nm. The glass transition temperature of a polymer of organic particles was 106°C.

[Preparative Example 3]

An emulsion composition was prepared using proportions shown in Table 1, in the same manner as in Preparative Example 2. As a result, an emulsion composition wherein organic particles were dispersed in water was obtained. The nonvolatile content thereof was 30%, and the pH value of the emulsion composition was 5. The average particle diameter determined by light scattering measurement was 80 nm. The glass transition temperature of a polymer of organic particles was 98°C.

[Preparative Example 4]

An emulsion composition was prepared using proportions shown in Table 1, in the same manner as in Preparative Example 1 except that 195 parts of deionized water and 0.05 part of stearyltrimethylammonium chloride were charged into the reaction vessel. As a result, an emulsion composition wherein organic particles were dispersed in water was obtained. The nonvolatile content thereof was 30%, and the pH value of the emulsion composition was 5. The average particle diameter determined by light scattering measurement was 400 nm. The glass transition temperature of a polymer of organic particles was 104°C.

[Preparative Example 5]

An emulsion composition was prepared using proportions shown in Table 1, in the same manner as in Preparative Example 1 except that 195 parts of deionized water and 1.5 parts of stearyltrimethylammonium chloride were charged into the reaction vessel. As a result, an emulsion composition wherein organic particles were dispersed in water was obtained. The nonvolatile content thereof was 30%, and the pH value of the emulsion composition was 5. The average particle diameter determined by light scattering measurement was 120 nm. The glass transition temperature of a polymer of organic particles was 108°C.

[Preparative Example 6]

An emulsion composition was prepared using proportions shown in Table 1, in the same manner as in Preparative Example 2. As a result, an emulsion composition wherein organic particles were dispersed in water was obtained. The nonvolatile content thereof was 30%, and the pH value of the emulsion composition was 5. The average particle

diameter determined by light scattering measurement was 87 nm. The glass transition temperature of a polymer of organic particles was 120°C.

[Preparative Example 7]

An emulsion composition was prepared using proportions shown in Table 1, in the same manner as in Preparative Example 1. As a result, an emulsion composition wherein organic particles were dispersed in water was obtained. The nonvolatile content thereof was 30%, and the pH value of the emulsion composition was 5. The average particle diameter determined by light scattering measurement was 68 nm. The glass transition temperature of a polymer of organic particles was 107°C.

[Preparative Example 8]

An emulsion composition was prepared using proportions shown in Table 1, in the same manner as in Preparative Example 5. As a result, an emulsion composition wherein organic particles were dispersed in water was obtained. The nonvolatile content thereof was 30%, and the pH value of the emulsion composition was 5. The average particle diameter determined by light scattering measurement was 121 nm. The glass transition temperature of a polymer of organic particles was 98°C.

[Preparative Example 9]

An emulsion composition was prepared using proportions shown in Table 1, in the same manner as in Preparative Example 5. As a result, an emulsion composition wherein organic particles were dispersed in water was obtained. The nonvolatile content thereof was 30%, and the pH value of the emulsion composition was 5. The average particle diameter determined by light scattering measurement was 131 nm. The glass transition temperature of a polymer of organic particles was 92°C.

[Preparative Example 10]

An emulsion composition was prepared using proportions shown in Table 1, in the same manner as in Preparative Example 2. As a result, an emulsion composition wherein organic particles were dispersed in water was obtained.

The nonvolatile content thereof was 30%, and the pH value of the emulsion composition was 5. The average particle diameter determined by light scattering measurement was 108 nm. The glass transition temperature of a polymer of organic particles was 70°C.

[Preparative Example 11]

An emulsion composition was prepared using proportions shown in Table 1, in the same manner as in Preparative Example 2. As a result, an emulsion composition wherein organic particles were dispersed in water was obtained. The nonvolatile content thereof was 30%, and the pH value of the emulsion composition was 5. The average particle diameter determined by light scattering measurement was 99 nm. The glass transition temperature of a polymer of organic particles was 115°C.

[Preparative Example 12]

An emulsion composition was prepared using proportions shown in Table 1, in the same manner as in Preparative Example 2. As a result, an emulsion composition wherein organic particles were dispersed in water was obtained.

The nonvolatile content thereof was 30%, and the pH value of the emulsion composition was 5. The average particle diameter determined by light scattering measurement was 89 nm. The glass transition temperature of a polymer of organic particles was 118°C.

[Preparative Example 13]

An emulsion composition was prepared using proportions shown in Table 1, in the same manner as in Preparative Example 2. As a result, an emulsion composition wherein organic particles were dispersed in water was obtained. The nonvolatile content thereof was 30%, and the pH value of the emulsion composition was 5. The average particle diameter determined by light scattering measurement was 105 nm. The glass transition temperature of a polymer of organic particles was 112°C.

[Preparative Example 14]

An emulsion composition was prepared using proportions shown in Table 1, in the same manner as in Preparative Example 5. As a result, an emulsion composition wherein organic particles were dispersed in water was obtained. The nonvolatile content thereof was 30%, and the pH value of the emulsion composition was 5. The average particle diameter determined by light scattering measurement was 115 nm. The glass transition temperature of a polymer of organic particles was 113°C.

[Preparative Example 15]

An emulsion composition was prepared using proportions shown in Table 1, in the same manner as in Preparative Example 5. As a result, an emulsion composition wherein organic particles were dispersed in water was obtained. The nonvolatile content thereof was 30%, and the pH value of the emulsion composition was 5. The average particle diameter determined by light scattering measurement was 111 nm. The glass transition temperature of a polymer of organic particles was 118°C.

[Preparative Example 16]

An emulsion composition was prepared using proportions shown in Table 1, in the same manner as in Preparative Example 5. As a result, an emulsion composition wherein organic particles were dispersed in water was obtained. The nonvolatile content thereof was 30%, and the pH value of the emulsion composition was 5. The average particle diameter determined by light scattering measurement was 112 nm. The glass transition temperature of a polymer of organic particles was 92°C.

[Preparative Example 17]

An emulsion composition was prepared using proportions shown in Table 1, in the same manner as in Preparative Example 5. As a result, an emulsion composition wherein organic particles were dispersed in water was obtained. The nonvolatile content thereof was 30%, and the pH value of the emulsion composition was 5. The average particle diameter determined by light scattering measurement was 108 nm. The glass transition temperature of a polymer of organic particles was 98°C.

[Preparative Example 18]

330 parts of deionized water, 8.3 parts of a cationic surfactant (trade name: CATIOGEN L®, manufactured by Dai ichi Kogyo Seiyaku Co., Ltd.), 4.7 parts of sulfuric acid, 0.5 part of 2-mercaptoethanol and 91 parts of cyclohexyl methacrylate were charged into a reaction vessel, and heated to 60°C in a nitrogen stream. 1 part of 2,2'-azobis(2-amidinopropane) dihydrochloride was added to the mixture. Thereafter, the mixture was heated to 75°C and maintained for 4 hours. The mixture was cooled to 50°C, and then 9.4 parts of N,N-dimethylaminoethyl methacrylate was added thereto and the resulting mixture was heated to 60°C. Subsequently, 1 part of 2,2'-azobis(2-amidinopropane) dihydrochloride dissolved in 50 parts of deionized water was added to the mixture, and further heated to 75°C and maintained for 3 hours to thereby complete the polymerization reaction. As a result, an emulsion composition wherein organic particles were dispersed in water was obtained. The nonvolatile content thereof was 25%. The average particle diameter determined by light scattering measurement was 247 nm. The glass transition temperature of a polymer of organic particles was 70°C.

[Preparative Example 19]

330 parts of deionized water, 8.3 parts of a cationic surfactant (trade name: CATIOGEN L®, manufactured by Daiichi Kogyo Seiyaku Co., Ltd.), 4.7 parts of sulfuric acid, 0.5 part of 2-mercaptoethanol and 9.4 parts of N,N-dimethylaminoethyl methacrylate were charged into a reaction vessel, and heated to 60°C in a nitrogen stream. 1 part of 2,2'-azobis(2-amidinopropane) dihydrochloride was added to the mixture. Thereafter, the mixture was heated to 75°C and maintained for 4 hours. The mixture was cooled to 50°C, and then 91 parts of cyclohexyl methacrylate was added thereto and the resulting mixture was heated to 60°C. Subsequently, 1 part of 2,2'-azobis(2-amidinopropane) dihydrochloride dissolved in 50 parts of deionized water was added to the mixture, and further heated to 75°C and maintained for 3 hours to thereby complete the polymerization reaction. As a result, an emulsion composition wherein organic particles were dispersed in water was obtained. The nonvolatile content thereof was 25%. The average particle diameter determined by light scattering measurement was 228 nm. The glass transition temperature of a polymer of organic particles

was 70°C.

<Preparation of Recording Sheet>

The construction and the evaluation results of recording sheets prepared in Examples and Comparative Examples were shown in Table 2.

<Preparation of Inkjet Receptive Paper>

[Example 1]

100 parts of synthetic amorphous silica (trade name: Finesil X-37B®,-manufactured by Tokuyama Corporation), 20 parts of completely saponified polyvinyl alcohol (trade name: PVA 117, manufactured by Kuraray Co., Ltd.) and 33.3 parts of Sumirez Resin 1001® manufactured by Sumitomo Chemical Co., Ltd.; solid content 30%) were added to water and mixed together under agitation, thereby obtaining a coating composition having a solid content of 15%. A wood free paper having a basis weight of 105 g/$m^2$ was coated with this coating composition so that the coating amount was 20 g/$m^2$ in absolute dry condition, and dried at 120°C for 1 min to obtain an inkjet receptive paper.

The resultant inkjet receptive paper was coated with another coating composition having a solid content of 15%, which was obtained by adding 500 parts of the emulsion composition obtained in Preparative Example 1, 750 parts of colloidal silica (trade name: Snowtex O ® manufactured by Nissan Chemical Industries, Ltd.; solid content 20%) and 20 parts of completely saponified polyvinyl alcohol (trade name: PVA 117, manufactured by Kuraray Co., Ltd.) to water and mixing them under agitation, so that the coating amount was 5 g/$m^2$ in absolute dry condition. Thereafter, the resultant coating layer was compressed at a linear pressure of 100 kg/cm onto a specular drum having its surface temperature maintained at 108°C as a smoothing treatment, thereby obtaining a recording sheet of Example 1.

[Example 2]

The same inkjet receptive paper as that of Example 1 was coated with a coating composition having a solid content of 15%, which was obtained by adding 1000 parts of the emulsion composition obtained in Preparative Example 1 and 20 parts of completely saponified polyvinyl alcohol (trade name: PVA 117, manufactured by Kuraray Co., Ltd.) to water and mixing them under agitation, so that the coating amount was 5 g/$m^2$ in absolute dry condition. Thereafter, the resultant coating layer was compressed at a linear pressure of 100 kg/cm onto a specular drum having its surface temperature maintained at 108°C as a smoothing treatment, thereby obtaining a recording sheet of Example 2.

[Example 3]

The same inkjet receptive paper as that of Example 1 was coated with a coating composition having a solid content of 15%, which was obtained by adding 100 parts of the emulsion composition obtained in Preparative Example 1, 1350 parts of colloidal silica (trade name: Snowtex O ®, manufactured by Nissan Chemical Industries, Ltd.; solid content 20%) and 20 parts of completely saponified polyvinyl alcohol (trade name: PVA 117, manufactured by Kuraray Co., Ltd.) to water and mixing them under agitation, so that the coating amount was 5 g/$m^2$ in absolute dry condition. Thereafter, the resultant coating layer was compressed at a linear pressure of 100 kg/cm onto a specular drum having its surface temperature maintained at 108°C as a smoothing treatment, thereby obtaining a recording sheet of Example 3.

[Example 4]

The same inkjet receptive paper as that of Example 1 was coated with a coating composition having a solid content of 15%, which was obtained by adding 500 parts of the emulsion composition obtained in Preparative Example 1, 750 parts of colloidal silica (trade name: Snowtex O ®, manufactured by Nissan Chemical Industries, Ltd.; solid content 20%) and 20 parts of completely saponified polyvinyl alcohol (trade name: PVA 117, manufactured by Kuraray Co., Ltd.) to water and mixing them under agitation, so that the coating amount was 5 g/$m^2$ in absolute dry condition, and dried at 120°C for 1 min. Thereafter, the resultant coating layer was compressed at a linear pressure of 50 kg/cm onto a calender roll having its surface temperature maintained at 108°C and passed five times between rolls as a smoothing treatment, thereby obtaining a recording sheet of Example 4.

[Example 5]

A recording sheet was prepared in the same manner as in Example 1 except that the emulsion composition

used in Example 1 was changed to the emulsion composition obtained in Preparative Example 2 and the surface temperature of a specular drum was changed to 103°C as a smoothing treatment, thereby obtaining a recording sheet of Example 5.

[Example 6]

A recording sheet was prepared in the same manner as in Example 1 except that the emulsion composition used in Example 1 was changed to the emulsion composition obtained in Preparative Example 3 and the surface temperature of a specular drum was changed to 100°C as a smoothing treatment, thereby obtaining a recording sheet of Example 6.

[Example 7]

The same inkjet receptive paper as that of Example 1 was coated with a coating composition having a solid content of 15%, which was obtained by adding 200 parts of the emulsion composition obtained in Preparative Example 4, 1200 parts of colloidal silica (trade name: Snowtex O ®, manufactured by Nissan Chemical Industries, Ltd.; solid content 20%) and 20 parts of completely saponified polyvinyl alcohol (trade name: PVA 117, manufactured by Kuraray Co., Ltd.) to water and mixing them under agitation, so that the coating amount was 5 g/$m^2$ in absolute dry condition. Thereafter, the resultant coating layer was compressed at a linear pressure of 100 kg/cm onto a specular drum having its surface temperature maintained at 104°C as a smoothing treatment, thereby obtaining a recording sheet of Example 7.

[Example 8]

The same inkjet receptive paper as that of Example 1 was coated with a coating composition having a solid content of 15%, the coating composition obtained by adding 800 parts of the emulsion composition obtained in Preparative Example 5, 300 parts of colloidal silica (trade name: Snowtex O ®, manufactured by Nissan Chemical Industries, Ltd.; solid content 20%) and 20 parts of completely saponified polyvinyl alcohol (trade name: PVA 117, manufactured by Kuraray Co., Ltd.) to water and mixing them under agitation, so that the coating amount was 5 g/$m^2$ in absolute dry condition. Thereafter, the resultant coating layer was compressed at a linear pressure of 100 kg/cm onto a specular drum having its surface temperature maintained at 102°C as a smoothing treatment, thereby obtaining a recording sheet of Example 7.

[Example 9]

A recording sheet was prepared in the same manner as in Example 2 except that the emulsion composition used in Example 2 was changed to the emulsion composition obtained in Preparative Example 6 and the surface temperature of a specular drum was changed to 121°C as a smoothing treatment, thereby obtaining a recording sheet of Example 9.

[Example 10]

A recording sheet was prepared in the same manner as in Example 2 except that the emulsion composition used in Example 2 was changed to the emulsion composition obtained in Preparative Example 7 and the surface temperature of a specular drum was changed to 109°C as a smoothing treatment, thereby obtaining a recording sheet of Example 10.

[Example 11]

A recording sheet was prepared in the same manner as in Example 2 except that the emulsion composition used in Example 2 was changed to the emulsion composition obtained in Preparative Example 8 and the surface temperature of a specular drum was changed to 100°C as a smoothing treatment, thereby obtaining a recording sheet of Example 11.

[Example 12]

A recording sheet was prepared in the same manner as in Example 7 except that the emulsion composition used in Example 7 was changed to the emulsion composition obtained in Preparative Example 9 and the surface temperature of a specular drum was changed to 100°C as a smoothing treatment, thereby obtaining a recording sheet

of Example 12.

[Example 13]

A recording sheet was prepared in the same manner as in Example 1 except that the emulsion composition used in Example 1 was changed to the emulsion composition obtained in Preparative Example 10 and the surface temperature of a specular drum was changed to 70°C as a smoothing treatment, thereby obtaining a recording sheet of Example 13.

[Example 14]

A recording sheet was prepared in the same manner as in Example 1 except that the emulsion composition used in Example 1 was changed to the emulsion composition obtained in Preparative Example 11 and the surface temperature of a specular drum was changed to 118°C as a smoothing treatment, thereby obtaining a recording sheet of Example 14.

[Example 15]

A recording sheet was prepared in the same manner as in Example 1 except that the emulsion composition used in Example 1 was changed to the emulsion composition obtained in Preparative Example 12 and the surface temperature of a specular drum was changed to 120°C as a smoothing treatment, thereby obtaining a recording sheet of Example 15.

[Example 16]

A recording sheet was prepared in the same manner as in Example 2 except that the emulsion composition used in Example 2 was changed to the emulsion composition obtained in Preparative Example 12 and the surface temperature of a specular drum was changed to 120°C as a smoothing treatment, thereby obtaining a recording sheet of Example 16.

[Example 17]

A recording sheet was prepared in the same manner as in Example 3 except that the emulsion composition used in Example 3 was changed to the emulsion composition obtained in Preparative Example 12 and the surface temperature of a specular drum was changed to 120°C as a smoothing treatment, thereby obtaining a recording sheet of Example 17.

[Example 18]

A recording sheet was prepared in the same manner as in Example 4 except that the emulsion composition used in Example 4 was changed to the emulsion composition obtained in Preparative Example 12 and the surface temperature of a calender roll was changed to 120°C as a smoothing treatment, thereby obtaining a recording sheet of Example 18.

[Example 19]

A recording sheet was prepared in the same manner as in Example 1 except that the emulsion composition used in Example 1 was changed to the emulsion composition obtained in Preparative Example 13 and the surface temperature of a specular drum was changed to 112°C as a smoothing treatment, thereby obtaining a recording sheet of Example 19.

[Example 20]

A recording sheet was prepared in the same manner as in Example 8 except that the emulsion composition used in Example 8 was changed to the emulsion composition obtained in Preparative Example 14 and the surface temperature of a specular drum was changed to 110°C as a smoothing treatment, thereby obtaining a recording sheet of Example 20.

[Example 21]

A recording sheet was prepared in the same manner as in Example 7 except that the emulsion composition used in Example 7 was changed to the emulsion composition obtained in Preparative Example 15 and the surface temperature of a specular drum was changed to 120°C as a smoothing treatment, thereby obtaining a recording sheet of Example 21.

[Comparative Example 1]

A recording sheet was prepared in the same manner as in Example 1 except that the emulsion composition used in Example 1 was changed to the emulsion composition obtained in Preparative Example 16 and the surface temperature of a specular drum was changed to 90°C as a smoothing treatment, thereby obtaining a recording sheet of Comparative Example 1.

[Comparative Example 2]

A recording sheet was prepared in the same manner as in Example 1 except that the emulsion composition used in Example 1 was changed to the emulsion composition obtained in Preparative Example 17 and the surface temperature of a specular drum was changed to 100°C as a smoothing treatment, thereby obtaining a recording sheet of Comparative Example 2.

[Comparative Example 3]

A recording sheet was prepared in the same manner as in Example 1 except that the emulsion composition used in Example 1 was changed to the emulsion composition obtained in Preparative Example 18 and the surface temperature of a specular drum was changed to 100°C as a smoothing treatment, thereby obtaining a recording sheet of Comparative Example 3.

[Comparative Example 4]

A recording sheet was prepared in the same manner as in Example 1 except that the emulsion composition used in Example 1 was changed to the emulsion composition obtained in Preparative Example 19 and the surface temperature of a specular drum was changed to 70°C as a smoothing treatment, thereby obtaining a recording sheet of Comparative Example 4.

[Comparative Example 5]

A recording sheet was prepared in the same manner as in Example 1 except that the emulsion composition used in Example 1 was changed to the emulsion composition obtained in Preparative Example 19 and the surface temperature of a specular drum was changed to 100°C as a smoothing treatment, thereby obtaining a recording sheet of Comparative Example 5.

[Comparative Example 6]

A recording sheet was prepared in the same manner as in Example 3 except that the emulsion composition used in Example 3 was changed to the emulsion composition obtained in Preparative Example 19 and the surface temperature of a specular drum was changed to 100°C as a smoothing treatment, thereby obtaining a recording sheet of Comparative Example 6.

[Comparative Example 7]

A recording sheet was prepared in the same manner as in Example 2 except that the emulsion composition used in Example 2 was changed to the emulsion composition obtained in Preparative Example 19 and the surface temperature of a specular drum was changed to 100°C as a smoothing treatment, thereby obtaining a recording sheet of Comparative Example 7.

[Comparative Example 8]

The same inkjet receptive paper as that of Example 1 was coated with a coating composition having a solid content of 15%, which was obtained by adding 1500 parts of colloidal silica (trade name: Snowtex O ®, manufactured by Nissan Chemical Industries, Ltd.; solid content 20%) and 20 parts of completely saponified polyvinyl alcohol (trade name: PVA 117, manufactured by Kuraray Co., Ltd.) to water and mixing them under agitation, so that the coating amount was 5 $g/m^2$ in absolute dry condition. Thereafter, the resultant coating layer was compressed at a linear pressure of 100 kg/cm onto a specular drum having its surface temperature maintained at 100°C as a smoothing treatment, thereby obtaining a recording sheet of Comparative Example 8.

[Method of Evaluation]

The evaluation was conducted in the following manner.

<Gloss Values>

In the gloss measurement, the level of gloss at 75° of the recording surface of each recording sheet was measured by means of a deformation glossmeter (Model GM-3D, manufactured by Murakami Color Research Laboratory Co., Ltd.) in accordance with JIS Z8741.

<Ink Absorptivity>

Solid printing of each of yellow ink, magenta ink, cyan ink and black ink was effected in the longitudinal direction of a recording sheet by means of a commercially available inkjet printer (Model PM2000C, manufactured by Seiko Epson Corporation). Immediately after delivery from the printer, a PPC paper was pressed onto the upper surface of the recording sheet, and the degree of transfer of ink from the recording sheet to the PPC paper was evaluated by visual inspection. The evaluation criteria were as follows:

◎: no ink transfer was observed, thereby being excellent in ink absorptivity;
**O:** slight ink transfer was observed, but the ink absorptivity was on a practicable level;
Δ:ink transfer was extensive, so that the ink absorptivity was below a practicable level; and
×: ink was not completely absorbed.

<Scratch Resistance>

Solid printing of black ink was effected by means of a commercially available inkjet printer (Model MC2000, manufactured by Seiko Epson Corporation). After drying overnight, a printed portion was slightly scratched with fingernails and the degree of ink peeling at the printed portion was visually evaluated. The evaluation criteria were as follows:

O: no ink peeling was observed, thereby being excellent in scratch resistance;
Δ: slight ink peeling was observed, but scratch resistance was on a practicable level; and
×: ink peeling was extensive, so that scratch resistance was below a practicable level.

<Surface Strength>

Two recording sheets each having no printing thereon were stacked with its front surface upward, a lower recording sheet was pulled out in a state that a weight of 100 g is placed thereon, and then scratches on the surface of an ink receptive layer were visually observed:

O: scratches were not completely observed;
Δ: scratches were slightly observed; and
×: scratches were clearly observed.

<Releasability from Specular Drum>

When a recording sheet was subjected to a smoothing treatment on a specular drum, a state from when the sheet (A4 size) prepared was contacted with the specular drum till when the sheet was dried to spontaneously release from the specular drum was visually observed:

◎: the sheet was rapidly released from the specular drum;
O:the sheet was released from the specular drum within 5 seconds;
Δ:more than 5 seconds was required for releasing the sheet from the specular drum, but the sheet was shortly released from the specular drum; and
×: the sheet was not spontaneously released from the specular drum and had to be forcibly released from the specular drum.

<Light Resistance>

Solid printing of magenta ink was effected by means of a commercially available inkjet printer (Model PM2000C, manufactured by Seiko Epson Corporation). The recording sheet after printing was exposed to light for 100 hours by means of a xenon fadometer. The residual ratio of optical reflection density after light exposure to that before light exposure was measured and referred to as "light resistance". The optical reflection density was measured by means of a Macbeth densitometer (RD-918).

<Yellowing Resistance>

Each recording sheet not subjected to printing was exposed to light for 7 hours by means of a carbon arc fadometer, and the difference between color before light exposure and color after light exposure was measured. The color difference (ΔE) was calculated by the formula:

$$(\Delta E) = \{(\Delta L^*)^2 + (\Delta a^*)^2 + (\Delta b^*)^2\}^{1/2}$$

from the results of measuring of color before light exposure and color after light exposure, in accordance with L*a*b* (expression method in conformity with CIE). The larger the color difference, the higher the color deterioration.

<Printing Concentration>

Solid printing with black ink was effected by means of commercially available inkjet printers (Model PM2000C, manufactured by Seiko Epson Corporation (using a dye ink); and Model MC2000, manufactured by Seiko Epson Corporation (using a pigment ink)). The optical reflection density of a solid portion was measured by means of a Macbeth densitometer (RD-918).

<Water Resistance>

Character printing with black ink was effected by means of a commercially available inkjet printer (Model PM2000C, manufactured by Seiko Epson Corporation). City water of 30°C was dropped on printed portion, and allowed to stand still for 1 hour. Thereafter, when any water drop remained thereon, it was sucked with waste cloth. The condition of print, such as surface appearance or bleeding, was evaluated by visual inspection. The evaluation criteria were as follows:

**O:** there was substantially no bleeding and was substantially no change of color density or surface appearance;
Δ: bleeding and deterioration of color density or surface appearance were observed, but the water resistance was on a practicable level; and
x: bleeding and deterioration of color density or surface appearance were apparent, and the water resistance was below a practicable level.

<Workability during Smoothing by Cast Coating Method (time required for drying)>

When a recording sheet was prepared by a cast coating method in Examples and Comparative Examples, a time from when the sheet (A4 size) prepared was contacted with the specular drum till when the sheet was dried to spontaneously release from the specular drum was measured.

Table 1

| Preparative Example | | 1 | | 2 | | 3 | | 4 | | 5 | | 6 | | 7 | |
|---|---|---|---|---|---|---|---|---|---|---|---|---|---|---|---|
| Copolymer | | (a) | (b) | (a) | (b) | (a) | (b) | (a) | (b) | (a) | (b) | (a) | (b) | (a) | (b) |
| Parts of the monomer used | Acrylamide | | | | | | | | | | | | | | |
| | Methacrylamide | | | | | | | | | | | | | | |
| | 2-hydroxyethyl methacrylate | 5 | | 10 | | | | 30 | | | | | | | |
| | Hydroxypropyl methacrylate | | | | | 30 | | | | | | | | | |
| | N,N-dimethylaminoethyl methacrylate | | | | | | | | | | | | | 15 | |
| | Methyl methacrylate | 35 | | | | | | 20 | | | | 10 | | | |
| | styrene | | | | | | | | | 60 | | | | 60 | |
| | Isobornyl acrylate | | | | | 20 | | | | | | | | | |
| | Isobornyl methacrylate | 60 | | 40 | | 50 | | 50 | | 40 | | 90 | | 25 | |
| | t-butyl methacrylate | | | 50 | | | | | | | | | | | |
| | n-butyl acrylate | | | | | | | | | | | | | | |
| | Cyclohexyl methacrylate | | | | | | | | | | | | | | |
| Parts of lauryltrimethylammonium chloride for emulsion | | 0.5 | | 0.5 | | 0.5 | | 0.5 | | 0.5 | | 0.5 | | 0.5 | |
| Parts of CATIOGEN L ® | | | | | | | | | | | | | | | |
| Parts of 2,2'-azobis(2-amidinopropane) dihydrochloride | | 0.5 | | 0.5 | | 0.5 | | 0.5 | | 0.5 | | 0.5 | | 0.5 | |
| Weight ratio of parts of (a)/parts of (b) | | 100 | 0 | 100 | 0 | 100 | 0 | 100 | 0 | 100 | 0 | 100 | 0 | 100 | 0 |
| Glass transition temperature (°C) | | 111 | | 106 | | 98 | | 104 | | 108 | | 120 | | 107 | |
| Particle diameter (nm) | | 60 | | 91 | | 80 | | 400 | | 120 | | 87 | | 68 | |

| Preparative Example | | 8 | | 9 | | 10 | | 11 | | 12 | | 13 | |
|---|---|---|---|---|---|---|---|---|---|---|---|---|---|
| Copolymer | | (a) | (b) | (a) | (b) | (a) | (b) | (a) | (b) | (a) | (b) | (a) | (b) |
| Parts of the monomer used | Acrylamide | | | | | | | | | | | | 2.5 |
| | Methacrylamide | | | | | | | | 7 | | 18 | | |
| | 2-hydroxyethyl methacrylate | | | 30 | | 10 | | 9 | | 8 | | 9.5 | |
| | Hydroxypropyl methacrylate | | | | | | | | | | | | |
| | N,N-dimethylaminoethyl methacrylate | | | | | | | | | | | | |
| | Methyl methacrylate | 20 | | | | | | 18 | 3 | | | 19 | |
| | styrene | | | | | | | | | | 2 | | |
| | Isobornyl acrylate | 30 | | | | | | | | | | | |
| | Isobornyl methacrylate | | | 10 | | 65 | | 63 | | 56 | | 66.5 | |
| | t-butyl methacrylate | 50 | | 60 | | | | | | 16 | | | 2.5 |
| | n-butyl acrylate | | | | | 25 | | | | | | | |
| | Cyclohexyl methacrylate | | | | | | | | | | | | |
| Parts of lauryltrimethylammonium chloride for emulsion | | 0.5 | | 0.5 | | 0.5 | | 0.5 | 0.5 | 0.5 | 0.5 | 0.5 | 0.5 |
| Parts of CATIOGEN L ® | | | | | | | | | | | | | |
| Parts of 2,2'-azobis(2-amidinopropane) dihydrochloride | | 0.5 | | 0.5 | | 0.5 | | 0.5 | 0.1 | 0.5 | 0.1 | 0.5 | 0.1 |
| Weight ratio of parts of (a)/parts of (b) | | 100 | 0 | 100 | 0 | 100 | 0 | 90 | 10 | 80 | 20 | 95 | 5 |
| Glass transition temperature (°C) | | 98 | | 92 | | 70 | | 115 | | 118 | | 112 | |
| Particle diameter (nm) | | 121 | | 131 | | 108 | | 99 | | 89 | | 105 | |

| Preparative Example | | 14 | | 15 | | 16 | | 17 | | 18 | | 19 | |
|---|---|---|---|---|---|---|---|---|---|---|---|---|---|
| Copolymer | | (a) | (b) | (a) | (b) | (a) | (b) | (a) | (b) | (a) | (b) | (a) | (b) |
| Parts of the monomer used | Acrylamide | | | | | | | | 16 | | | | |
| | Methacrylamide | | 2.1 | | 22.5 | | | | | | | | |
| | 2-hydroxyethyl methacrylate | 9.7 | | 7.5 | | 20 | | 16 | | | | | |
| | Hydroxypropyl methacrylate | | | | | | | | | | | | |
| | N,N-dimethylaminoethyl methacrylate | | | | | | | | | | 9.4 | 9.4 | |
| | Methyl methacrylate | 19.4 | 0.9 | | | | | | 4 | | | | |
| | styrene | | | | 2.5 | 80 | | 64 | | | | | |
| | Isobornyl acrylate | | | | | | | | | | | | |
| | Isobornyl methacrylate | 67.9 | | 52.5 | | | | | | | | | |
| | t-butyl methacrylate | | | 15 | | | | | | | | | |
| | n-butyl acrylate | | | | | | | | | | | | |
| | Cyclohexyl methacrylate | | | | | | | | | 91 | | | 91 |
| Parts of lauryltrimethylammonium chloride for emulsion | | 0.5 | 0.5 | 0.5 | 0.5 | 0.5 | | 0.5 | 0.5 | | | | |
| Parts of CATIOGEN L ® | | | | | | | | | | 8.3 | | 8.3 | |
| Parts of 2,2'-azobis(2-amidinopropane) dihydrochloride | | 0.5 | 0.1 | 0.5 | 0.1 | 0.5 | | 0.5 | 0.1 | 1 | 1 | 1 | 1 |
| Weight ratio of parts of (a)/parts of (b) | | 97 | 3 | 75 | 25 | 100 | 0 | 80 | 20 | 91 | 9 | 9 | 91 |
| Glass transition temperature (°C) | | 113 | | 118 | | 92 | | 98 | | 70 | | 70 | |
| Particle diameter (nm) | | 108 | | 111 | | 112 | | 108 | | 247 | | 228 | |

Table 2

| | Proportion of layer containing organic particles (organic particles/inorganic particles) | Organic particles used | Smoothing treatment method | Temperature of drum (°C) | White paper gloss (%) | Ink absorp tivity | Scratch resistance | Light resistance (%) | Yellowing resistance (ΔE) |
|---|---|---|---|---|---|---|---|---|---|
| Ex. 1 | 50/50 | Prep. Ex. 1 | Cast | 108 | 85 | O | O | 86 | 1.2 |
| Ex. 2 | 100/0 | Prep. Ex. 1 | Cast | 108 | 89 | O | O | 87 | 1.1 |
| Ex. 3 | 10/90 | Prep. Ex. 1 | Cast | 108 | 82 | O | O | 83 | 1.3 |
| Ex. 4 | 50/50 | Prep. Ex. 1 | Calender | 108 | 75 | O | O | 85 | 1.2 |
| Ex. 5 | 50/50 | Prep. Ex. 2 | Cast | 103 | 83 | O | O | 82 | 1.2 |
| Ex. 6 | 50/50 | Prep. Ex. 3 | Cast | 100 | 85 | O | O | 86 | 1.2 |
| Ex. 7 | 20/80 | Prep. Ex. 4 | Cast | 104 | 82 | O | O | 81 | 1.3 |
| Ex. 8 | 80/20 | Prep. Ex. 5 | Cast | 102 | 87 | O | O | 87 | 1.1 |
| Ex. 9 | 100/0 | Prep. Ex. 6 | Cast | 121 | 88 | O | O | 87 | 1.0 |
| Ex. 10 | 100/0 | Prep. Ex. 7 | Cast | 109 | 86 | O | O | 85 | 1.1 |
| Ex. 11 | 100/0 | Prep. Ex. 8 | Cast | 100 | 87 | O | O | 86 | 1.1 |
| Ex. 12 | 20/80 | Prep. Ex. 9 | Cast | 100 | 83 | O | O | 82 | 1.3 |
| Ex. 13 | 50/50 | Prep. Ex. 10 | Cast | 70 | 85 | O | O | 86 | 1.2 |
| Ex. 14 | 50/50 | Prep. Ex. 11 | Cast | 118 | 86 | O | O | 84 | 1.2 |
| Ex. 15 | 50/50 | Prep. Ex. 12 | Cast | 120 | 86 | O | O | 85 | 1.2 |
| Ex. 16 | 100/0 | Prep. Ex. 12 | Cast | 120 | 88 | O | O | 88 | 1.1 |
| Ex. 17 | 10/90 | Prep. Ex. 12 | Cast | 120 | 83 | O | O | 82 | 1.3 |
| Ex. 18 | 50/50 | Prep. Ex. 12 | Calender | 120 | 75 | O | O | 85 | 1.2 |
| Ex. 19 | 50/50 | Prep. Ex. 13 | Cast | 112 | 86 | O | O | 87 | 1.2 |
| Ex. 20 | 80/20 | Prep. Ex. 14 | Cast | 110 | 87 | O | O | 85 | 1.1 |
| Ex. 21 | 20/80 | Prep. Ex. 15 | Cast | 120 | 84 | O | O | 85 | 1.2 |
| Comp. Ex. 1 | 50/50 | Prep. Ex. 16 | Cast | 90 | 83 | Δ | O | 81 | 1.3 |
| Comp. Ex. 2 | 50/50 | Prep. Ex. 17 | Cast | 100 | 85 | Δ | O | 82 | 1.3 |
| Comp. Ex. 3 | 50/50 | Prep. Ex. 18 | Cast | 100 | 73 | × | Δ | 82 | 1.4 |
| Comp. Ex. 4 | 50/50 | Prep. Ex. 19 | Cast | 70 | 82 | Δ | Δ | 76 | 1.4 |
| Comp. Ex. 5 | 50/50 | Prep. Ex. 19 | Cast | 100 | 72 | × | Δ | 74 | 1.5 |
| Comp. Ex. 6 | 10/90 | Prep. Ex. 19 | Cast | 100 | 71 | Δ | Δ | 75 | 1.4 |
| Comp. Ex. 7 | 100/0 | Prep. Ex. 19 | Cast | 100 | Not released from cast drum | | | | |
| Comp. Ex. 8 | 0/100 | --- | Cast | 100 | 67 | O | × | 65 | 1.7 |

| | Proportion of layer containing organic particles (organic particles/inorganic particles) | Organic particles used | Smoothing treatment method | Temperature of drum (°C) | Printing concentration (dye) | Printing concentration (pigment) | Water resistance | Drying time (sec) | Surface strength | Releasability from specular drum |
|---|---|---|---|---|---|---|---|---|---|---|
| Ex. 1 | 50/50 | Prep. Ex. 1 | Cast | 108 | 2.2 | 2.2 | ○ | 6 | ○ | ○ |
| Ex. 2 | 100/0 | Prep. Ex. 1 | Cast | 108 | 2.4 | 2.2 | ○ | 7 | ○ | ○ |
| Ex. 3 | 10/90 | Prep. Ex. 1 | Cast | 108 | 2.2 | 2.4 | ○ | 5 | ○ | ○ |
| Ex. 4 | 50/50 | Prep. Ex. 1 | Calender | 108 | 2.4 | 2.3 | ○ | 8 | ○ | - |
| Ex. 5 | 50/50 | Prep. Ex. 2 | Cast | 103 | 2.2 | 2.4 | ○ | 6 | ○ | ○ |
| Ex. 6 | 50/50 | Prep. Ex. 3 | Cast | 100 | 2.3 | 2.3 | ○ | 6 | ○ | ○ |
| Ex. 7 | 20/80 | Prep. Ex. 4 | Cast | 104 | 2.0 | 2.0 | ○ | 7 | ○ | ○ |
| Ex. 8 | 80/20 | Prep. Ex. 5 | Cast | 102 | 2.2 | 2.2 | ○ | 6 | ○ | ○ |
| Ex. 9 | 100/0 | Prep. Ex. 6 | Cast | 121 | 2.3 | 2.3 | ○ | 7 | ○ | ○ |
| Ex. 10 | 100/0 | Prep. Ex. 7 | Cast | 109 | 2.2 | 2.3 | ○ | 8 | ○ | ○ |
| Ex. 11 | 100/0 | Prep. Ex. 8 | Cast | 100 | 2.4 | 2.4 | ○ | 6 | ○ | ○ |
| Ex. 12 | 20/80 | Prep. Ex. 9 | Cast | 100 | 2.4 | 2.3 | ○ | 7 | ○ | ○ |
| Ex. 13 | 50/50 | Prep. Ex. 10 | Cast | 70 | 2.4 | 2.3 | ○ | 37 | ○ | ○ |
| Ex. 14 | 50/50 | Prep. Ex. 11 | Cast | 118 | 2.3 | 2.3 | ○ | 5 | ○ | ◎ |
| Ex. 15 | 50/50 | Prep. Ex. 12 | Cast | 120 | 2.3 | 2.3 | ○ | 7 | ○ | ◎ |
| Ex. 16 | 100/0 | Prep. Ex. 12 | Cast | 120 | 2.4 | 2.4 | ○ | 6 | ○ | ◎ |
| Ex. 17 | 10/90 | Prep. Ex. 12 | Cast | 120 | 2.3 | 2.3 | ○ | 5 | ○ | ◎ |
| Ex. 18 | 50/50 | Prep. Ex. 12 | Calender | 120 | 2.2 | 2.3 | ○ | 6 | ○ | - |
| Ex. 19 | 50/50 | Prep. Ex. 13 | Cast | 112 | 2.4 | 2.4 | ○ | 5 | ○ | ◎ |
| Ex. 20 | 80/20 | Prep. Ex. 14 | Cast | 110 | 2.3 | 2.3 | ○ | 6 | ○ | ◎ |
| Ex. 21 | 20/80 | Prep. Ex. 15 | Cast | 120 | 2.4 | 2.4 | ○ | 7 | ○ | ◎ |
| Comp. Ex. 1 | 50/50 | Prep. Ex. 16 | Cast | 90 | 2.1 | 2.4 | Δ | 36 | ○ | Δ |
| Comp. Ex. 2 | 50/50 | Prep. Ex. 17 | Cast | 100 | 2.1 | 2.3 | Δ | 5 | ○ | × |
| Comp. Ex. 3 | 50/50 | Prep. Ex. 18 | Cast | 100 | 1.6 | 1.9 | × | 8 | ○ | × |
| Comp. Ex. 4 | 50/50 | Prep. Ex. 19 | Cast | 70 | 1.8 | 1.8 | Δ | 32 | ○ | × |
| Comp. Ex. 5 | 50/50 | Prep. Ex. 19 | Cast | 100 | 1.5 | 1.8 | × | 9 | ○ | × |
| Comp. Ex. 6 | 10/90 | Prep. Ex. 19 | Cast | 100 | 1.6 | 1.6 | × | 8 | ○ | × |
| Comp. Ex. 7 | 100/0 | Prep. Ex. 19 | Cast | 100 | Not released from cast drum | | | | | |
| Comp. Ex. 8 | 0/100 | --- | Cast | 100 | 1.6 | 2.1 | × | 9 | Δ | ◎ |

## Claims

1. Organic particles for an inkjet recording sheet comprising
a copolymer (a) which is obtained by copolymerizing alicyclic (meth)acrylate (A) represented by the formula (1) and other monomer (B) copolymerizable with, (A):

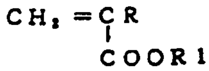

...... (1)

wherein R represents a hydrogen atom or a methyl group; and R1 represents an alicyclic hydrocarbon group having 8 to 20 carbon atoms, and a copolymer (b) which is obtained by copolymerizing (meth)acrylamide (C) and another monomer (D) copolymerizable with (C) (a)/(b) is 100/0 to 70/30 % by weight, when the total weight of (a) and (b) is taken as 100 % by weight.

2. The organic particles for an inkjet recording sheet according to claim 1, wherein the alicyclic (meth)acrylate (A) represented by the formula (1) is isobornyl methacrylate.

3. The organic particles for an inkjet recording sheet according to claim 1, wherein the copolymer (a) comprises 20 to 100% by weight of (A) and 0 to 80% by weight of (B), when the total weight of alicyclic (meth)acrylate (A) represented by the formula (1) and the other monomer (B) copolymerizable with (A) is taken as 100% by weight.

4. The organic particles for an inkjet recording sheet according to claim 1, wherein the copolymer (b) comprises 50 to 100% by weight of (C) and 0 to 50% by weight of (D), when the total weight of (meth)acrylamide (C) and the other monomer (D) copolymerizable with (C) is taken as 100% by weight.

5. A process for producing the organic particles for an inkjet recording sheet according to anyone of claims 1 to 4, wherein the organic particles comprising (a) and (b) are obtained by copolymerizing (meth)acrylamide (C) and other monomer (D) copolymerizable with (C) in the presence of the copolymer (a).

6. The organic particles for an inkjet recording sheet according to claim 1, wherein the glass transition temperature of the organic particles as measured in accordance with JIS K 7121 is 90 to 160 deg. C.

7. The organic particles for an inkjet recording sheet according to claim 1, wherein the organic particles are cationic organic particles.

8. An inkjet recording sheet comprising a sheet-shaped support and at least one ink receptive layer superimposed thereon which contains organic particles according to claim 1.

9. The inkjet recording sheet according to claim 8, wherein the ink receptive layer containing the organic particles is an outermost layer.

10. The inkjet recording sheet according to claim 8, wherein the outermost layer of the recording sheet is subjected to a smoothing treatment by means of a cast coating method.

## Patentansprüche

1. Organische Partikel für ein Tintenstrahl-Aufzeichnungsblatt, umfassend ein Copolymer (a), welches durch Copolymerisation eines alicyclischen (Meth)acrylats (A) der Formel (1) und eines anderen mit (A) copolymerisierbaren Monomers (B) erhalten wird:

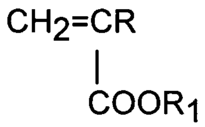 ( 1 )

worin R ein Wasserstoffatom oder eine Methylgruppe darstellt und $R_1$ eine alicyclische Kohlenwasserstoffgruppe mit 8 bis 20 Kohlenstoffatomen darstellt,
und ein Copolymer (b), welches durch Copolymerisation eines (Meth)acrylamids (C) und eines anderen mit (C) copolymerisierbaren Monomers (D) erhalten wird;

(a)/(b) ist 100/0 bis 70/30 Gew.%, wenn das Gesamtgewicht von (a) und (b) als 100 Gew.% genommen wird.

**2.** Organische Partikel für ein Tintenstrahl-Aufzeichnungsblatt gemäss Anspruch 1, worin das alicyclische (Meth)acrylat (A) der Formel (1) Isobornylmethacrylat ist.

**3.** Organische Partikel für ein Tintenstrahl-Aufzeichnungsblatt gemäss Anspruch 1, worin das Copolymer (a) 20 bis 100 Gew.% von (A) und 0 bis 80 Gew.% von (B) umfasst, wenn das Gesamtgewicht des alicyclischen (Meth)acrylats (A) der Formel (1) und des anderen mit (A) copolymerisierbaren Monomers (B) als 100 Gew.% genommen wird.

**4.** Organische Partikel für ein Tintenstrahl-Aufzeichnungsblatt gemäss Anspruch 1, worin das Copolymer (b) 50 bis 100 Gew.% von (C) und 0 bis 50 Gew.% von (D) umfasst, wenn das Gesamtgewicht des (Meth)acrylamids (C) und des anderen mit (C) copolymerisierbaren Monomers (D) als 100 Gew.% genommen wird.

**5.** Verfahren zur Herstellung der organischen Partikel für ein Tintenstrahl-Aufzeichnungsblatt gemäss einem der Ansprüche 1 bis 4, worin die organischen Partikel, umfassend (a) und (b), durch Copolymerisation eines (Meth)acrylamids (C) und eines anderen mit (C) copolymerisierbaren Monomers (D) in Gegenwart des Copolymers (a) erhalten werden.

**6.** Organische Partikel für ein Tintenstrahl-Aufzeichnungsblatt gemäss Anspruch 1, worin die gemäss JIS K 7121 gemessene Glasübergangstemperatur der organischen Partikel 90 bis 160°C ist.

**7.** Organische Partikel für ein Tintenstrahl-Aufzeichnungsblatt gemäss Anspruch 1, worin die organischen Partikel kationische organische Partikel sind.

**8.** Tintenstrahl-Aufzeichnungsblatt, umfassend einen blattförmigen Träger und mindestens eine darüberliegende Tintenaufnahmeschicht, welche organische Partikel gemäss Anspruch 1 enthält.

**9.** Tintenstrahl-Aufzeichnungsblatt gemäss Anspruch 8, worin die Tintenaufnahmeschicht, welche die organischen Partikel enthält, die äusserste Schicht ist.

**10.** Tintenstrahl-Aufzeichnungsblatt gemäss Anspruch 8, worin die äusserste Schicht des Aufzeichnungsblattes einer Glättungsbehandlung mittels eines Giessbeschichtungsverfahrens unterworfen ist.

## Revendications

**1.** Particules organiques pour feuille d'enregistrement à jet d'encre comprenant un copolymère (a) qui est obtenu par copolymérisation de (méth)acrylate alicyclique (A) représenté par la formule (1) et d'un autre monomère (B) copolymérisable avec (A) :

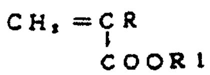 ..... (1)

où R représente un atome d'hydrogène ou un groupe méthyle ; et R1 représente un groupe hydrocarbure alicyclique ayant 8 à 20 atomes de carbone, et un copolymère (b) qui est obtenu par copolymérisation de (méth)acrylamide (C) et d'un autre monomère (D) copolymérisable avec (C) (a)/(b) est de 100/0 à 70/30 % en poids, lorsque le poids total de (a) et (b) est considéré comme 100 % en poids.

**2.** Particules organiques pour feuille d'enregistrement à jet d'encre selon la revendication 1, dans lesquelles le (méth) acrylate alicyclique (A) représenté par la formule (1) est le méthacrylate d'isobornyle.

**3.** Particules organiques pour feuille d'enregistrement à jet d'encre selon la revendication 1, dans lesquelles le copolymère (a) comprend 20 à 100 % en poids de (A) et 0 à 80 % en poids de (B), lorsque le poids total de (méth)acrylate alicyclique (A) représenté par la formule (1) et de l'autre monomère (B) copolymérisable avec (A) est considéré comme 100 % en poids.

**4.** Particules organiques pour feuille d'enregistrement à jet d'encre selon la revendication 1, dans lesquelles le copolymère (b) comprend 50 à 100 % en poids de (C) et 0 à 50 % en poids de (D), lorsque le poids total de (méth) acrylamide (C) et de l'autre monomère (D) copolymérisable avec (C) est considéré comme 100 % en poids.

**5.** Procédé de production des particules organiques pour feuille d'enregistrement à jet d'encre selon l'une quelconque des revendications 1 à 4, dans lequel les particules organiques comprenant (a) et (b) sont obtenues par copolymérisation de (méth)acrylamide (C) et d'un autre monomère (D) copolymérisable avec (C) en présence du copolymère (a).

**6.** Particules organiques pour feuille d'enregistrement à jet d'encre selon la revendication 1, dans lesquelles la température de transition vitreuse des particules organiques mesurée conformément à la norme JIS K 7121 est de 90 à 160 degrés C.

**7.** Particules organiques pour feuille d'enregistrement à jet d'encre selon la revendication 1, dans lesquelles les particules organiques sont des particules organiques cationiques.

**8.** Feuille d'enregistrement à jet d'encre comprenant un support en forme de feuille et au moins une couche réceptrice d'encre superposée sur celui-ci qui contient des particules organiques selon la revendication 1.

**9.** Feuille d'enregistrement à jet d'encre selon la revendication 8, dans laquelle la couche réceptrice d'encre contenant les particules organiques est une couche la plus externe.

**10.** Feuille d'enregistrement à jet d'encre selon la revendication 8, dans laquelle la couche la plus externe de la feuille d'enregistrement est soumise à un traitement de lissage au moyen d'un procédé de couchage à haut brillant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3436351 B
- JP 11302337 A
- JP 2003211821 A
- JP 11011011 A
- JP 2004175113 A
- EP 1418055 A1
- WO 03057495 A
- WO 9616120 A
- WO 9616357 A
- US 5310595 A
- US 6586097 B1
- US 6338838 B1
- EP 1051963 A1